Europäisches Patentamt

(19) European Patent Office

Office européen des brevets

(11) Publication number: **0 069 352**
**B1**

(12) **EUROPEAN PATENT SPECIFICATION**

(45) Date of publication of patent specification: **19.06.85**

(21) Application number: **82105882.3**

(22) Date of filing: **01.07.82**

(51) Int. Cl.⁴: **G 01 B 7/12**

(54) **Process and apparatus for measuring optical-fibre diameter.**

(30) Priority: **06.07.81 IT 6793681**

(43) Date of publication of application:
**12.01.83 Bulletin 83/02**

(45) Publication of the grant of the patent:
**19.06.85 Bulletin 85/25**

(84) Designated Contracting States:
**AT BE CH DE FR GB LI NL SE**

(56) References cited:
**GB-A- 680 695**
**GB-A- 855 595**
**GB-A-2 020 816**
**US-A-2 516 768**
**US-A-3 879 660**

(73) Proprietor: **CSELT Centro Studi e Laboratori
Telecomunicazioni S.p.A.
Via Guglielmo Reiss Romoli, 274
I-10148 Turin (IT)**

(72) Inventor: **Grego, Giorgio
C.so Crosseto 190
Turin (IT)**

(74) Representative: **Riederer Freiherr von Paar zu
Schönau, Anton et al
Freyung 615 Postfach 2664
D-8300 Landshut (DE)**

Courier Press, Leamington Spa, England.

## Description

The present invention relates to a process and an apparatus for measuring the diameter of optical fibres, more particularly fibres which are being drawn.

It is known that during fibre drawing the diameter of the manufactured fibre has to be kept constant, since diameter variations give origin to losses both along the individual fibre trunks and in correspondence with future splices. The measurement of the fibre diameter or of its variations gives a useful control parameter of the drawing operation.

Various measurement methods are already known.

One of these methods makes use of a laser beam which is moved back and forth in a plane perpendicular to the fibre and which is collected by a photodiode. The diameter size can be deduced from the knowledge of the speed of the beam motion and from the measurement of the darkening time. Yet this method requires expensive apparatuses and allows measurements with a resolution of the order of microns, which can be insufficient.

A second known method consists in focusing on a diode matrix, through a conventional optical system (for instance a microscope objective), the light emitted by a fixed source: the fibre diameter can be obtained from the size of the shadow. This method is well suited to measurements on fibre trunks already produced, for instance for laboratory purposes; yet, during fibre drawing, fibre vibrations may cause important errors, so that repeated measures and heavy signal processings are necessary to obtain reliable values.

Analogous disadvantages are encountered when using interferential methods, as the fibre oscillations cause continuous shifts of the interference fringes thus rendering the reading difficult. In addition the apparatuses carrying out these methods are very difficult to use.

For controlling the thickness of yarns, strips, sheets or the like, particularly of textile material, it has become known (GB—A—680 695, US—A—2 516 768) to let the respective material pass between capacitor plates, the capacitor being a component of an oscillating circuit the frequency of which is further evaluated. Also, continuous measuring of a yarn by means of such capacitor has been known (US—A—3 879 660, GB—A—2 020 816), wherein the capacitor is part of a bridge circuit. In these and other applications (GB—A—855 595), the yarn running through the capacitor electric field is wound up by a winding drum.

The invention is to allow a high measurement precision not affected by fibre vibrations during drawing, without requiring complicated and expensive apparatuses. According to the invention, a process for measuring the optical-fibre diameter, wherein the fibre, while being drawn, is made to pass between the two plates of a parallel-plate capacitor and the capacitance variations due to dielectric constant variations in the space between the plates caused by the introduction of the fibre into said space and by the diameter variations along the fibre which, together with air or another gas between the two plates forms the capacitor dielectric, are detected, is characterized in that one of the plates of the capacitor consists of an electret and said capacitance variations are detected by measuring variations of the potential across the capacitor. An apparatus carrying out this process, comprising a parallel-plate capacitor placed along the fibre drawing path upstream a winding drum so that the fibre passes between the two plates, and connected to means detecting the capacitance variations of the capacitor caused by the introduction of the fibre and by the fibre diameter variations, the means detecting the capacitance variations being in turn connected to means calculating the fibre diameter or its variations, is characterized in that one of the plates of the capacitor consists of an electret and in that the means detecting the capacitance variations is a potential measuring means.

The capacitor being an electret capacitor, the capacitance variations can be measured from variations of potential, which are easier to detect.

The invention will become clearer with reference to the annexed drawing in which:

— Fig. 1 is a schematic representation of an optical fibre drawing plant equipped with the diameter measuring apparatus of the invention, and

— Fig. 2 is a cross sectional view, on enlarged scale, obtained with a plane perpendicular to the fibre and passing through line II—II of Fig. 1.

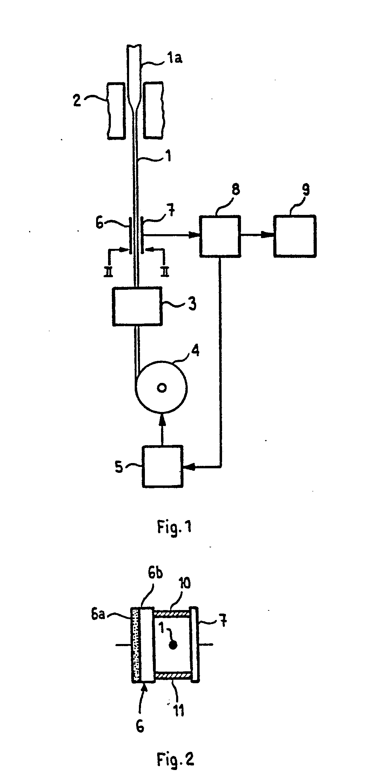

In Fig. 1 a fibre 1, outgoing from a furnace 2 wherein a preform 1a, obtained in any known way, is melted, passes into a cladding station 3, if any, and is wound up on a drum 4 driven by a motor 5. To measure the diameter of the fibre being drawn and to control its constancy, fibre 1, upstream the cladding station 3, is made to pass between the two plates 6, 7 of a parallel-plate capacitor.

The introduction of a fibre into the space between the capacitor plates 6, 7 causes a variation in the dielectric constant and hence a capacitance variation $\Delta C$, depending on radius $a$ of the fibre according to the relation:

$$\frac{\Delta C}{C} = \frac{\pi a^2}{S} \cdot \frac{\varepsilon_1 - \varepsilon_0}{\varepsilon_1 + \varepsilon_0} \qquad (1)$$

where S is the surface of the section, orthogonal to the capacitor plates and to the fibre axis, of the dielectric comprised between the two capacitor plates, $\varepsilon_1$ is the dielectric constant of the material the fibre is made of, $\varepsilon_0$ is the dielectric constant of the medium (air or another gas) which surrounds the fibre in the space between the two capacitor plates; C is the capacitor capacitance when the dielectric is only the medium of dielectric constant $\varepsilon_0$.

Equation (1) is obtained by solving the Lapace equation in the dielectric between the plates, with the suitable boundary conditions, and considering the fibre insertion as a perturbation.

Capacitor 6, 7 is connected to a capacitance measuring device 8, apt to measure the value of $\Delta C$ or the variations of such a value caused by changes in the fibre diameter. The capacitance measuring device 8 can be connected in turn to a computing device 9, which gives the radius (or diameter) value and is possibly associated with a display (not shown), which gives a visual image of the diameter behaviour.

Taking into account the need to keep the fibre diameter constant, the circuit measuring the capacitance variations can be inserted into a feedback loop for the control of the speed of motor 5 driving drum 4, so that any capacitance variation due to the fibre diameter variations causes a variation of the drawing speed such as to annul the variation itself.

The embodiment of such feedback loop is well known in the art.

Capacitor 6, 7 is a constant charge capacitor of the type in which one of the plates, e.g. plate 6, consists of an electret, as shown in Fig. 2, where 6b denotes the electrized membrane joined to the supporting element 6a. In this case the ratio

is equal to

$$\frac{\frac{\Delta C}{C}}{-\frac{\Delta V}{V}}:$$

the measurement of the capacitance variation is replaced by voltage variation measurements, which are relatively simpler. The variation measuring circuit can in fact be a simple differential amplifier.

The above relation is valid provided the electrical field in the region wherein the fibre is inserted is constant. This is easy to obtain if surface S is much greater than the fibre radius: for instance taking into account that such radius is generally about 100 microns, the plate sides (considering for sake of simplicity rectangular plates) can be of the order of some millimeters.

By these sizes also fibre oscillations during the drawing, bringing the fibre near the plate edges, are prevented from affecting the capacitor capacitance. As the oscillations amplitudes are as a rule of the order of 1 or 2 diameters, the above-defined dimensions for the capacitor plates are such that the fibre, when centered in respect to the plates themselves, cannot reach the edges.

By the use on the contrary of a capacitor with non-rectangular plates (e.g. with triangular, circular, elliptic ... plates) the capacitance changes induced by such oscillations could be exploited to detect the instantaneous fibre position and or compensate for reading errors due to the displacement of the fibre itself.

Considering again the example of rectangular plates, to avoid oscillations which may bring the fibre in correspondence with the plate edges, said edges can be joined by spacers 10, 11 (Fig. 2), e.g. of polytetrafluorine ethylene (teflon).

Said spacers are also to maintain the parallelism between the plates necessary to the application of relation (1) and to prevent relative oscillations of the plates, which may give rise to spurious capacitance changes which may be detrimental to the measurement.

Obviously spacers 10, 11 will have such thickness as to prevent the capacitor discharge, taking into account the plate potential and the dielectric strength of the medium between the plates; obviously the thickness must be higher than the maximum estimated diameter of the fibre. For instance, if the dielectric is air, which has a dielectric strength of the order of 2KV/mm, values of capacitor charge and plate distance will be suitable that give a potential-to-distance ratio of about one hundred volts per millimeter.

It is evident that the above description is given only as a non limitative example, and that variations and modifications could be made while remaining within the scope of the invention.

## Claims

1. Process for measuring optical-fibre diameter, wherein the fibre (1), while being drawn, is made to pass between the two plates of a parallel-plate capacitor (6, 7) and the capacitance variations due to dielectric constant variations in the space between the plates caused by the introduction of the fibre into said space and by the diameter variations along the fibre which, together with air or another gas between the two plates forms the capacitor dielectric, are detected, characterized in that one of the plates (6) of the capacitor (6, 7) consists of an electret (6b) and said capacitance variations are detected by measuring variations of the potential across the capacitor.

2. Apparatus for carrying out the process according to claim 1 comprising a parallel-plate capacitor (6, 7), placed along the fibre drawing path upstream a winding drum (4) so that the fibre passes between the two plates, and connected to means (8) detecting the capacitance variations of the capacitor caused by the introduction of the fibre (1) and by the fibre diameter variations, the means (8) detecting the capacitance variations being in turn connected to means (9) calculating the fibre diameter or its variations, characterized in that one of the plates (6) of the capacitor (6, 7) consists of an electret (6b) and in that the means (8) detecting the capacitance variations is a potential measuring means.

3. Apparatus according to claim 2, characterized in that the two plates (6, 7) of the capacitor are kept joined and parallel by insulating spacers (10, 11) placed in correspondence with opposite edges of the plates themselves.

4. Apparatus according to any of claims 2 or 3, characterized in that the potential measuring means (8) is inserted into a feedback loop (8, 5, 4) for the control of the winding speed of the fibre (1) on the drum (4) so as to cause speed variations which annul the diameter variations.

## Patentansprüche

1. Verfahren zur Messung des Durchmessers von optischen Fasern, bei dem die Faser (1), während sie gezogen wird, zwischen den beiden Platten eines Parallel-Platten-Kondensators (6, 7) hindurchgeführt wird und die durch im Raum zwischen den Platten auftretenden Änderungen der Dielektrizitätskonstante, die durch die Einführung der Faser in diesen Raum und durch Durchmesseränderungen entlang der Faser, welcher zusammen mit Luft oder einem anderen Gas zwischen den beiden Platten das Kondensatordielektrikum bildet, bewirkten Kapazitätsänderungen festgestellt werden, dadurch gekennzeichnet, daß eine der Platten (6) des Kondensators (6, 7) aus einem Elektret (6b) besteht und die Kapazitätsänderungen durch Messung von Änderungen des Potentials am Kondensator festgestellt werden.

2. Vorrichtung zur Durchführung des Verfahren nach Anspruch 1, mit einem Parallel-Platten-Kondensator (6, 7), der vor einer Wickertrommel (4) so entlang dem Faserziehweg angeordnet ist, daß die Faser zwischen den beiden Platten hindurchläuft, und der mit Einrichtungen (8) verbunden ist, die die Kapazitätsänderungen des Kondensators feststellen, welche das Einführen der Faser (1) und durch die Faserdurchmesseränderungen bewirkt werden, und die ihrerseits mit den Faserdurchmesser oder seine Änderungen berechnenden Einrichtungen (9) verbunden sind, dadurch gekennzeichnet, daß eine der beiden Platten (6) des Kondensators (6, 7) aus einem Elektret (6b) besteht und daß die die Kapazitätsänderungen feststellenden Einrichtungen (8) eine Potentialmeßeinrichtung sind.

3. Vorrichtung nach Anspruch 2, dadurch gekennzeichnet, daß die beiden Platten (6, 7) des Kondensators durch isolierende Abstandsstücke (10, 11), die in Übereinstimmung mit gegenüberliegenden Rändern der Platten angeordnet sind, verbunden und parallel gehalten sind.

4. Vorrichtung nach einem der Ansprüche 2 oder 3, dadurch gekennzeichnet, daß die Potentialmeßeinrichtungen (8) in eine Rückkoppelungsschleife (8, 5, 4) für die Steuerung der Wickelgeschwindigkeit der Faser (1) auf der Trommel (4) zur Bewirkung von Drehzahländerungen, die die Durchmesseränderungen beseitigen, angeordnet sind.

## Revendications

1. Procédé pour mesurer le diamètre de fibres optiques, où l'on fait passer la fibre (1), pendant l'étirage, entre les deux armatures d'un condensateur (6, 7) avec armatures parallèles et on détecte les variations de capacité dues aux variations de la constante diélectrique dans l'espace entre les armatures, ces variations étant provoquées par l'introduction de la fibre dans ledit espace et par les variations du diamètre le long de la fibre qui, avec l'air ou autre gas présent entre les armatures, constitue le diélectrique du condensateur, caractérisé en ce qu'une des armatures (6, 7) du condensateur consiste d'un électret, et on détecte les variations de capacité en mesurant des variations de potentiel à travers le condensateur.

2. Appareil pour la mise en oeuvre du procédé selon la revendication 1, comprenant un condensateur avec armatures parallèles (6, 7), placé sur le parcours d'étirage de la fibre, en amont d'un tambour d'enroulement (4), de telle façon que la fibre passe entre les armatures, et associé à des moyens (8) de détection des variations de capacité du condensateur provoquées par l'introduction de la fibre (1) et par les variations du diamètre de celle-ci, les moyens (8) de détection des variations de capacité étant connectés à des moyens (9) pour calculer le diamètre de la fibre, ou les variations du diamètre, caractérisé en ce qu'une des armatures consiste d'un électret et en ce que les moyens (8) de détection des variations de capacité sont des moyens de mesure du potentiel.

3. Appareil selon la revendication 2, caractérisé en ce que les deux armatures (6, 7) du condensateur sont maintenues unies et parallèles par des éléments isolants (10, 11) placés en correspondance de bords opposés des armatures.

4. Appareil selon l'une quelconque des revendications 2 ou 3, caractérisé en ce que les moyens (8) de mesure du potentiel sont introduits dans un boucle de contre-réaction (8, 5, 4) pour le contrôle de la vitesse d'enroulement de la fibre (1) sur le tambour (4), de façon à provoquer des variations de vitesse qui annulent les variations du diamètre.

0 069 352

Fig.1

Fig.2